# EUROPEAN PATENT APPLICATION

(11) **EP 2 787 380 A1**
(43) Date of publication of application: **08.10.2014**
(21) Application number: 13162187.2
(22) Date of filing: 03.04.2013
(51) Int. Cl.: G02B 6/44

(54) **Cable sorter automat and method for automatically sorting cables**

(71) Applicant: Tyco Electronics Nederland B.V., 5222 AR's-Hertogenbosch (NL)
(72) Inventor: van Wuyckhuyse, Louis, 5212 RH, 's-Hertogenbosch (NL); van der Bruggen, Ton, 5262 Vught SL (NL)
(74) Representative: Grünecker, Kinkeldey, Stockmair & Schwanhäusser

(57) **Abstract**

The invention relates to a cable sorter automat (1) for rearranging a plurality of cables (17) of a predefined cable diameter (47) in predetermined sequence, in particular for cables (17) comprising at least one of an optical fiber and an electrical wire. The invention further relates to a method for rearranging a plurality of cables (17) in a predefined sequence, in particular cables (17) comprising at least one of an optical fiber and an electrical wire. In order to provide a cable sorter automat (1) that automatically sorts and rearranges cables (17) in a fast and cost-effective way while reducing the risk of damaging or impurifying the cables (17), it is intended according to the invention that the cable sorter automat (1) comprises at least one sorting buffer (5) with storage bins (11) for accommodating individual uncoiled cables (17), a congregator arrangement (7) for transferring cables (17) to and from the sorting buffer (5), wherein the congregator arrangement (7) comprises at least one congregator slit (9), and wherein the sorting buffer (5) and the congregator arrangement (7) are moveable relatively to each other. In order to be able to sort and rearrange cables (17) quickly and with high accuracy, it is intended according to the invention that the plurality of cables (17) is loaded into a sorting buffer (5) in which the cables (17) are stored separately and subsequently moved individually from the sorting buffer (5) into a congregating arrangement (7) in the predefined sequence.

## Description

The invention relates to a cable sorter automat for rearranging a plurality of cables of a predefined cable diameter in a predetermined sequence, in particular for cables comprising at least one of an optical fiber and an electric wire. The invention further relates to a method for rearranging a plurality of cables in a predefined sequence, in particular for cables comprising at least one of an optical fiber and an electric wire.

Sorting and rearranging cables in a predetermined sequence is in general performed manually with the help of some basic tools. Manual sorting and rearranging of cables is a time consuming process. Manual sorting is also susceptible to mistakes being made in the cable sequence. Other disadvantages of a manual sorting and rearranging process are the risks of damage being done to the cables and of impurifying the cable with debris during the process. Especially when handling optical fibers, even small impurifications or small damages done to the cable, for example by bending of the cable below a tolerable bending radius, can lead to a failure or complete breakdown of the cable function.

It is an object of the present invention to provide a cable sorter automat and a method for sorting cables, which allows for fast sorting and rearranging a plurality of cables and thereby eliminating the above mentioned disadvantages of a manual sorting process.

The object is reached according to the invention for a cable sorter automat as mentioned in the beginning in that the cable sorter automat comprises at least one sorting buffer with storage bins for accommodating individual uncoiled cables, a congregator arrangement for transferring cables to and from the sorting buffer, wherein the congregator arrangement comprises at least one congregator slit, and wherein the sorting buffer and the congregator arrangement are moveable relatively to each other. For the above mentioned method for sorting cables the object is reached in that the plurality of cables is loaded into a sorting buffer, in which the cables are stored separately, and subsequently being moved individually from the sorting buffer into a congregating arrangement in the predefined sequence.

In the following, further improvements of the cable sorter automat according to the invention are described. These additional improvements may be combined independently of each other, depending on whether a particular advantage of a particular improvement is needed in a specific application.

According to a first advantageous improvement, at least one congregator slit may be adapted to force cables in a flat and parallel arrangement. The congregator slits may guide the cables into a linear arrangement. The width of the congregator slit may be adapted to prevent one cable to move pass another cable and to change the sequence.

A congregator slit may be used for loading the cable sorter automat with cables to be sorted and to extract sorted cables after a sorting process.

The width of the congregator slit may be chosen to be at least 100 % and less than 200 % of the cable diameter. Especially for optical fibers, it can be necessary to ribbonize the plurality of fibers in order to attach them to connections, for example, of nodes, other cables or devices. Therefore, the adapted congregator slit may provide the sorted and rearranged cables in an arrangement, which can be directly used for following process steps in handling the cables. The chosen width of the congregator slit effectively forces the cables to stay in the arrangement without the risk of accidentally changing the sequence.

For an effective transfer of a cable between a storage bin and a congregator slit, at least one storage bin of the cable sorter automat may preferably comprise an opening, which, in a transport position, is aligned to a congregator slit.

According to another advantageous improvement, at least one storage bin may be formed as a receptacle for receiving cables, with a diameter of the receptacle being chosen between 110 % and 130 % of the cable diameter. The chosen diameter of the receptacle may allow the storage bin to securely accommodate a cable located in a storage bin, but at the same time provide enough space to avoid damages to the cable and to allow the cable to bend slightly, in order to avoid excessive forces on the cable.

An opening of at least one storage bin may preferably limited by at least one pusher surface, wherein a direction of the pusher surface is having a component parallel to a surface of the sorting buffer and a component perpendicular to the surface of the sorting buffer. The pusher surface may have a width of at least one half of the cable diameter. The pusher surface may be formed as a transition between the storage bin and a surface of the sorting buffer. The pusher surface may be adapted to push a cable in a direction towards the congregator slit during a relative movement between the sorting buffer and the congregator arrangement, without risking a damage of the cable.

At least one of the pusher surfaces may be at least partially flat, wherein the angle between the flat area and a surface of the sorting buffer adjacent to the pusher surface is chosen to be between 25° and 35°. The flat area may have the shape of a chamfer being located at at least one edge of a storage bin. The chosen angle of the flat area may provide a pressure angle on a cable located in the congregator slit which is comparable to the pressure angle of a pressure applied by a cable located in the storage bin onto a cable in the congregator slit. The pressure angle is defined by the angle between a surface normal on a cable surface of a cable located in a congregator slit and a center line of the congregator slit, wherein the surface normal is located at a contact point between the cable and the congregator slit and the object which is applying the pressure onto the cable. According to an advantageous improvement, each storage bin may comprise two pusher surfaces which are at least partially flat.

Alternatively, at least one of the pusher surfaces may be at least partially curved, wherein the radius of the curvature is chosen between 100 % and 120 % of the cable radius. The curvature may lead to a smooth pressure on a cable located in the congregator slit during a relative movement between the sorting buffer and the congregator arrangement.

According to another advantageous improvement, the cable sorter automat may comprise at least one stationary locking member, adapted to close the storage bins which are not aligned to a congregator slit. During a relative movement between the sorting buffer and the congregator arrangement, it is important to prevent cables from accidentally moving out of the storage bins. The stationary locking member effectively closes the storage bin and maintains accommodated cables in their position.

To provide a fast and reliable transfer of cables between the sorting buffer and the congregator arrangement, the cable sorter automat may preferably comprise at least one cable transfer member, adapted to transfer at least one cable between a storage position, in which the at least one cable is accommodated in a storage bin and a transfer position, in which the at least one cable is located in a congregator slit.

The cable transfer member may be used to handle the cables in parameters which do not bear the risk of damages being made to the cables and also to keep the cables clean from impurities being made during the process. By using the cable transfer member, no manual interaction may be needed for transferring the cables between a congregator slit and the sorting buffer, which avoids the above mentioned disadvantages for the cables which may occur during a manual process.

The cable transfer member may be movable relatively to the sorting buffer. Alternatively, the cable transfer member may be adapted to transfer cables by suitable techniques such as suction or grabbing.

The cable transfer member may be connected to a drive, such as at least one motor or at least one actuator, providing actuation of the cable transfer member.

The cable transfer member may preferably be moveable into a closing position, in which the cable transfer member is at least in parts aligned with the surface of the sorting buffer. During a relative movement between the sorting buffer and the congregator arrangement, a cable transfer member being in the closing position effectively prevents cables, being located in storage bins, from accidentally entering the congregator slit.

According to another advantageous improvement, at least one sorting buffer may comprise at least one transfer recess, which is opened towards the surface of the sorting buffer and at least one cable transfer member may be moveable into an extracting position, in which at least one cable transfer member is at least partially penetrating at least one transfer recess. In the extracting position the cable transfer member is, seen from the congregator slit, behind a cable which is located in a storage bin. A movement of the cable transfer member into a direction towards the congregator slit may therefore transfer the cable into the congregator slit.

According to another advantageous improvement, the sorting buffer may be formed by at least one cylinder, which is revolvable around a rotational axis and wherein at least one storage bin is arranged at the cylinder surface, the at least one storage bin being aligned parallel to the rotational axis. A cylinder provides a very compact sorting buffer. A cable sorter automat, which uses a revolvable cylinder as a sorting buffer, may comprise a stationary congregator arrangement. Therefore, a rotational movement of the cylinder may move requested storage bins to a congregator slit and may align a storage bin with a congregator slit. The cylinder may comprise at least one storage bin for each of the cables from the plurality of cables. Therefore the cylinder may be adapted to accommodate all cables of a plurality of cables at the same time. The storage bins may be arranged equally spaced from each other around the cylinder surface.

The cylinder may comprise at least one transfer recess which is formed by a continuous channel, encircling the cylinder around the rotational axis and being opened in a radial direction towards a cylinder surface.

The cable sorter automat may preferably comprise a cable sensor, which is directed onto cables, the cables being located in a congregator slit or in the sorting buffer, and wherein the cable sensor is adapted to detect a cable identification characteristic and to transmit a cable sequence signal to a control module. A cable sensor may detect and recognize the individual cables of a plurality of cables in order to determine the actual cable sequence prior or after the sorting and rearranging process.

The control module may preferably comprise a comparator, which is adapted to compare the cable sequence signal to a predefined target sequence, and wherein the control module is operatively connected to a drive, moving at least one of the sorting buffer and the cable transfer member. The control module may be fed with a desired target sequence of the cables. The comparator may compare the actual cable sequence with the target sequence and may, if the actual sequence differs from the target sequence, operate the drive and control the sorting and rearranging process.

According to another advantageous improvement, at least one cable transfer member may be spring loaded, wherein the spring load applies pressure on a cable into a direction towards the sorting buffer along a congregation slit. The spring loaded cable transfer member may be used during feeding of the sorting buffer with cables from a congregator slit. The cable transfer member may be moved into a position in which the cables are located between the sorting buffer and the cable transfer member. The cable transfer member may be adapted to continuously apply pressure on the cables towards the sorting buffer in order to keep the cable alignment in the congregation slit.

The congregator arrangement may comprise at least two congregator slits, spaced apart from each other. The congregator arrangement may comprise one congregator slit for feeding cables into the sorting buffer and a second congregator slit for extracting cables from the sorting buffer. In an advantageous embodiment the congregator arrangement may comprise one congregator slit, used for feeding cables into the sorting buffer and for extracting and rearranging cables from the sorting buffer.

A compact design and a simple construction of cable sorter automat can be achieved when a sorting buffer which is formed as a cylinder is axially connected to a motor, adapted to drive the revolving movement of the cylinder.

According to another advantageous improvement, the stationary locking member may be adapted to form a bearing for the sorting buffer. In particular, if the sorting buffer is formed by a revolving cylinder, at least one stationary locking member may be adapted to encircle the cylinder to form a mechanical bearing for the cylinder.

The cable sorter automat may comprise a drive assembly, comprising at least one motor and/or at least one actuator, providing the driving force for the relative movement between the cable sorter and the congregator arrangement. The drive may be connected to an energy source, providing energy for the drive.

In the following, the invention and its improvements are described in greater detail using an exemplary embodiment and with reference to the figures. As described above, the various features shown in the embodiment may be used independently of each other in specific applications.

In the following figures, elements having the same function and/or the same structure will be referenced by the same reference signs.

In the figures:
- Fig. 1: shows a schematic sectional view of an embodiment of a cable sorter automat according to the invention in a cut perpendicular to the rotational axis of a cylinder;
- Fig. 2: shows a schematic perspective view of a cable sorter automat according to the invention in a cut along a horizontal cross-section;
- Fig. 3: shows a schematic cut-out of the embodiment shown in Fig. 2 in a top view on a horizontal cross-section;
- Fig. 4: shows a schematic side view of one embodiment of a storage bin according to the invention;
- Fig. 5-9: show a series of process steps during feeding of a sorting buffer according to the invention with a plurality of cables; and
- Fig. 10-14: show a series of process steps of extracting cables from a sorting buffer according to the invention in a congregator slit.

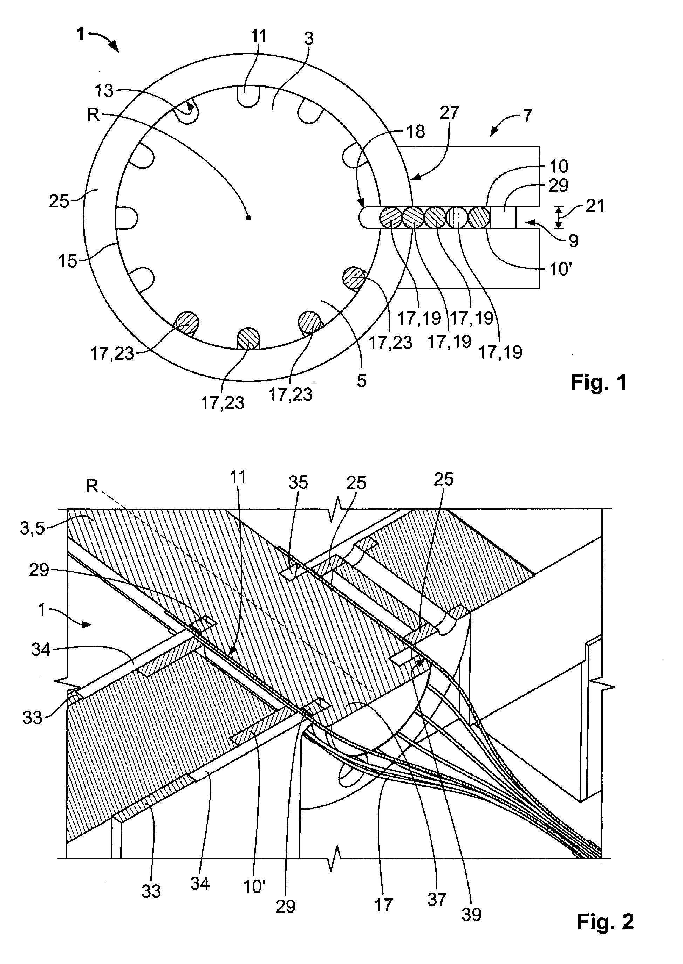

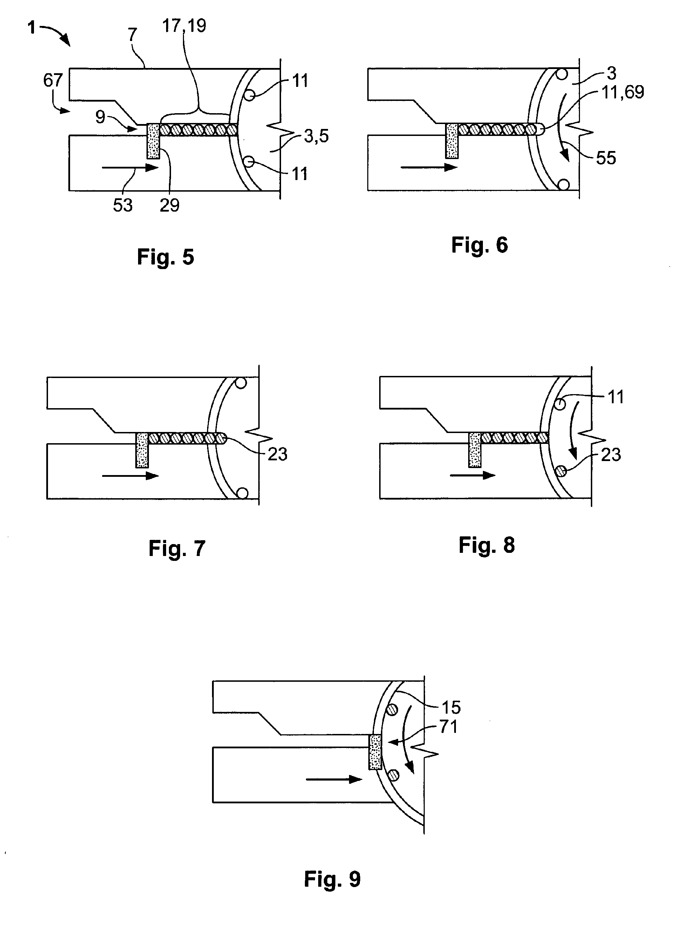

First of all, structure and function of a cable sorter automat according to the invention will be described with reference to Figs. 1 to 4. Figs. 5 to 9 and 10 to 14 will describe the process steps of the method for sorting to cables according to the invention using a cable sorter automat according to the invention.

Fig. 1 shows a schematic view of a cable sorter automat 1 according to the invention in a cut perpendicular to a rotational axis R of a revolving cylinder 3. The revolving cylinder 3 forms the sorter 1 comprises a sorting buffer 5. A congregator arrangement 7 comprises one congregation slit 9.

The sorting buffer 5 comprises a plurality of storage bins 11. The storage bins 11 are opened in a radial direction of the cylinder 3, the openings 13 facing away from the rotational axis R and being aligned with a cylinder surface 15. One of the storage bins 11 is shown in a transport position 18, its opening 13 being aligned with the congregator slit 9.

The storage bins 11 of the sorting buffer 5 are arranged equally spaced from each other around the cylinder surface 15.

Fig. 1 shows a cable sorter automat in an intermediate process step during feeding of the sorting buffer 5 with cables 17. A portion of cables 17 is located in the congregator slit 9. The cables 17 that are located in the congregator slit 9 are arranged in the transfer position 19. The congregator slit 19 is adapted to align the cables 17 in a flat and parallel order. The congregator slit 9 comprises slit surfaces 10 and 10'.

The cables 17 that are located in storage bins 11 of the sorting buffer 5 are arranged in a storage position 23. A stationary locking member 25 is arranged around the cylinder 3, effectively closing the storage bins 11, maintaining the cables 17 inside the storage bins 11 during rotational movement of the cylinder 3.

The stationary locking member 25 comprises a cover opening 27, allowing the cables 17 to be transferred between the congregator 7 and the storage bins 11 in the sorting buffer 5. The stationary locking member 25 may be adapted to form a mechanical bearing for the cylinder 3.

During feeding of the sorting buffer 5 with cables 17, the cable transfer member 29 may press the cables 17 that are in a transfer position 19 in a direction towards the sorting buffer 5.

Fig. 2 shows a schematic perspective view of a cable sorter automat 1 with cables 17 being located in the storage bins 11 around the cylinder 3 and with the cable transfer member 29 being located in an extracting position 31.

The storage bins 11 are aligned parallel to the rotational axis R. The cable sorter automat 1 may comprise two stationary locking members 25. The stationary locking members 25 may be adapted to bear the cylinder 3 during rotational movement.

The cable sorter automat 1 may comprise two cable transfer members 29 which are spaced apart from each other along a direction parallel to the rotational axis R. The cable transfer members 29 may be formed as protrusions of cable transfer arrangements 33, the cable transfer arrangements 33 supporting the cable transfer members 29 and connecting them to a drive, which may comprise at least one motor or actuator.

The cable transfer arrangements 33 may comprise a cable support surface 34 which is formed as a recess. The cable support surface 34 may be aligned with the slit surface 10' when the cable transfer member 29 is in the extracting position 31.

The two stationary locking members 25 are spaced apart from each other and are enclosed between the two cable transfer members 29. Alternatively, the stationary locking members 25 can be arranged having the cable transfer members 29 between them.

The cylinder 3 comprises two transfer recesses 35. The transfer recesses 35 are formed as channels which encircle the cylinder 3 around the rotational axis R. The transfer recesses 35 are adapted to allow the cable transfer members 29 to move into the extracting position 31, in which the cable transfer members 29 penetrate the transfer recesses 35.

The cylinder 3 may comprise an aligning head 37, comprising an aligning surface 39 which is adapted to pre-align cables 17 in order to maintain an uncoiled alignment of the cables 17 that are located in storage bins 11.

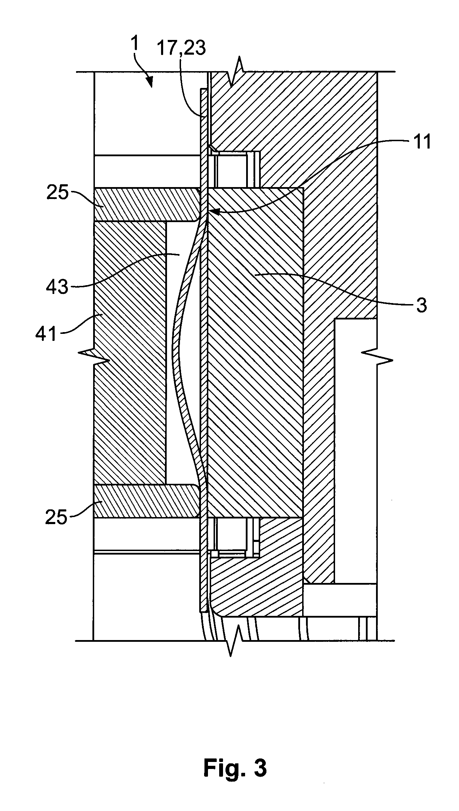

Fig. 3 shows a schematic sectional top view of a cable sorter automat 1.

The cable sorter automat 1 may comprise a housing 41, which surrounds the cylinder 3 at least in parts. Between the cylinder 3 and the housing 41, a bending space 43 is formed. The bending space 43 encircles the cylinder 3, providing space for cables 17 that are in the storage position 23 to bend at least partially out of the storage bins 11. By allowing the cables 17 to bend at least partially out of the storage bins 11, cable damage can be prevented and the risk of a cable stopping the movement of the cylinder 3 by getting stuck between the cylinder 3 and the housing 41 is effectively reduced. The bending space 43 may be enclosed by the stationary locking members 25.

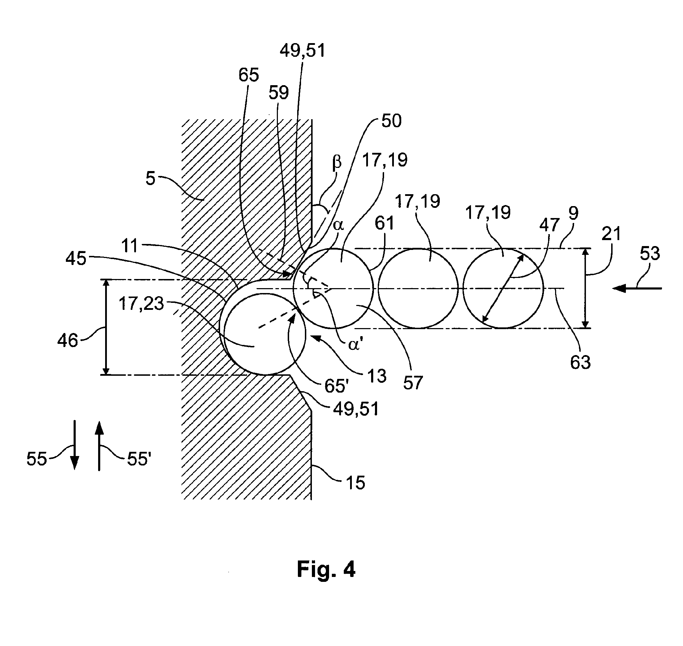

Fig. 4 shows a schematic sectional side view of a storage bin 11 being closed to a congregation slit 9 during a process of transferring the cables 17 from the congregation slit 9 into the sorting buffer 5 in a cut perpendicular to the rotational axis R.

The storage bin 11 is formed as a rounded receptacle 45. The width 46 of the receptacle 45 is preferably chosen to be between 110% and 130% of the cable diameter 47. The opening 13 of the storage bin 11 may be limited by pusher surfaces 49. The pusher surfaces 49 may be formed as flat areas 51. The pusher surfaces 49 can alternatively be curved. In the following, the function of the pusher surfaces 49 is described. The function is explained for one of the pusher surfaces 49, but is valid for both pusher surfaces 49 of the storage bin 11.

During a transfer of cables 17 from the transfer position 19 into the storage position 23, the cables 17 being in the transfer position 19 may be pushed along a feeding direction 53 towards the sorting buffer 5.

After one cable 17 has been placed in a storage bin 11 and is therefore in the storage position 23, the sorting buffer 5 may be moved along a direction 55 or 55' in order to place a next empty storage bin 11 in front of the congregation slit 9. During movement along the direction 55, maintaining the cables 17 that are in the transfer position 19 inside the congregator slit 9 is desired. The pusher surface 49 effectively pushes the cables 17 that are in the transfer position 19 into the congregator slit 9 in a direction being opposite to the feeding direction 53. The pusher surface 49 applies pressure to a cable 17, which is in a move-up position 57. The move-up position is defined as being the position of cable 17 that is in the transfer position 19 and being located adjacent to a storage bin 11.

The pusher surfaces 49 each have a width 50 which is preferably between 50 % and 100% of the cable diameter 47. A direction of the pusher surface 49 is having a component parallel to a surface 15 of the sorting buffer 5 and a component perpendicular to the surface 15 of the sorting buffer 5.

The pusher surface 49 applies pressure onto the cable 17 being in the move-up position 57 at a pressure angle α. The pressure angle α is defined as the angle between a surface normal 59 on a cable surface 61 and a center line 63 of the congregator slit 9, wherein the surface normal 59 is located at a contact point 65 between the cable 17 and the pusher surface 49. The pressure angle α is preferably around 30 ° in order to avoid cable damage.

During movement of the sorting buffer 5 in a direction 55', a cable 17 being in the storage position 23 applies pressure on a cable 17 being in the move-up position 57 at a pressure angle α'. The pressure angle α' is defined as the angle between a surface normal 59' on the cable surface 61 and the centre line 63 of the congregator slit 9, wherein the surface normal 59' is located at a contact point 65' of the cable 17 being in the storage position 23 and the cable 17 being the move-up position 57.

The pusher surface 49 is preferably adapted to apply pressure onto the cable 17 in the contact position 57 at a pressure angle α which is similar to the pressure angle α', at which a cable 17 that is in the storage position 23 applies pressure to the cable 17 that is at the move-up position 57 when the sorting buffer 5 moves along the direction 55'.

In this embodiment, the pusher surface 49 is flat. The angle β between the flat area 51 and the surface 15 of the sorting buffer 5 adjacent to the opening 13 is preferably chosen to be between 25° and 35°.

The geometry of the pusher surfaces 49 may vary depending on the cable diameter 47 and the width 46 of the receptacle 45. The geometry may be adapted in order to form pusher surfaces 49 which push cables 17 in a direction towards the congregator slit 9.

The congregator slit 9 may be adapted to force cables 17 in a flat and parallel arrangement. The width 29 of the congregator slit 9 may be adapted to prevent one cable 17 to move pass another cable 17 and to change the sequence. It may me adapted to force the cables in a flat and parallel arrangement. The width 29 of the congregator slit 9 is preferably chosen to be at least 100 % and less than 200 % of the cable diameter 47 to keep the cables 17 in the flat and parallel arrangement. An advantageous width 29 of the congregator slit 9 may be 120 % of the cable diameter 47.

Figs. 5 to 9 show a schematic presentation of a transfer process wherein cables 17 are loaded into a sorting buffer 1 according to the invention. In order to keep a clear presentation of the process steps, reference signs of elements which do not differ in the figures are not shown in every single Figs. 5 to 9.

Fig. 5 shows cables 17 loaded into the congregator slit 9 in a transfer position 19. At least one cable transfer member 29 keeps the cables 17 located inside the congregator slit 9 and may be adapted to push the cables 17 together. The cable transfer member 29 may be spring loaded to apply pressure onto the cables 17 along the feeding direction 53.

The sorting buffer 5, which is formed as a cylinder 3, is not yet in a position in which a storage bin 11 is in a transport position 18, where it is aligned to the congregator slit 9. In this process step, the cable sequence may be detected by a cable sensor in order to determine the actual cable sequence.

The congregator arrangement may comprise an insertion opening 67, adapted to facilitate the easy insertion of cables into the congregation slit 9.

Fig. 6 shows the cylinder 3 after rotation around the rotational axis R in the direction 55. The cylinder 3 has been rotated until one storage bin 11 is aligned to the congregator slit 9, being in the transport position 18. The storage bin 11 is now ready to receive a cable 17 from the congregator slit 9. The cable 17 that is located closest to the cylinder 3, but not accommodated in a storage bin 11, is in the move-up position 57.

Fig. 7 shows the sorting buffer 1 after the cable transfer member 29 has moved into the feeding direction 53 for a distance of one cable diameter 47. The cable 17 that was in the move-up position 57 has been moved into the storage bin 11, being now in the storage position 23.

Fig. 8 shows the sorting buffer 1 after the cylinder 3 has been rotated partially in the direction 55, transporting the cable 17 that is in the storage position 23 along the direction 55 and, at the same time, moving an empty storage bin 11 in a direction towards the congregator slit 9. For the cables 17 that are in the transfer position 19, the process steps shown in the Figs. 5 to 8 are now repeated until all cables 17 have been inserted into storage bins 11, the cables 17 then being in the storage position 23.

Fig. 9 shows the situation when all cables 17 are accommodated in storage bins 11 and the congregator slit 9 is empty. The cable transfer member 29 has moved along the feeding direction 53 until it aligns with the cylinder surface 15, closing the congregator slit 9 to prevent cables 17 from accidentally moving into the congregator slit 9. The cable transfer member 29 is now located at the closing position 71.

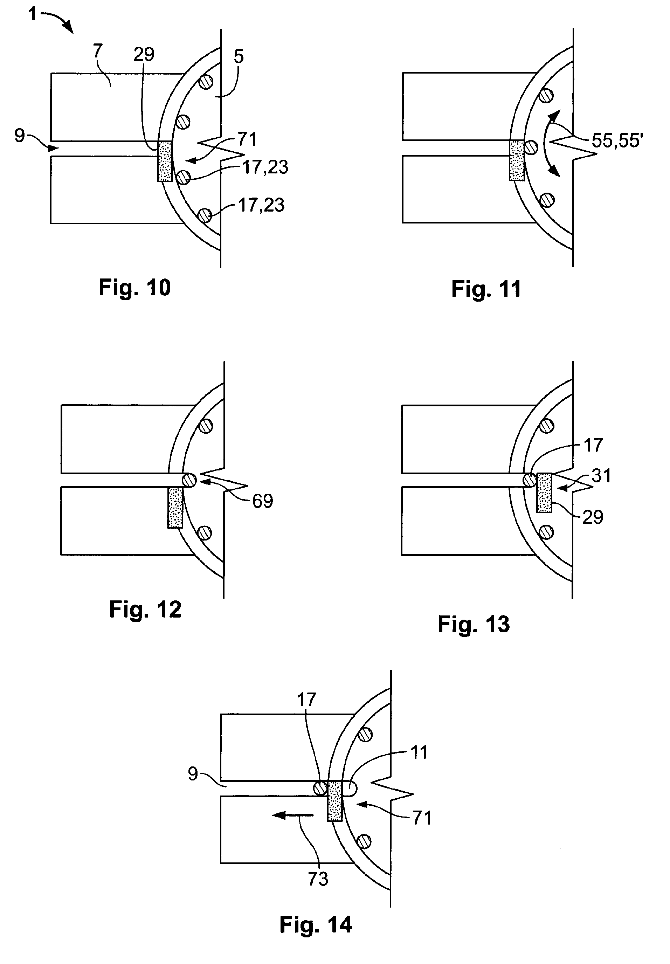

Figs. 10-14 schematically shows the process of transferring cables 17 from the sorting buffer 5 into a congregator slit 9.

Fig. 10 resembles the situation of Fig. 9. The cables 17 are accommodated in the storage bins 11 in the sorting buffer 5 and the cable transfer member 29 is located at the closing position 71.

Fig. 11 shows the first step of an extracting process. According to a predetermined cable sequence, the cylinder 3 may rotate in any of the directions 55 or 55' to align a first cable 17 that is to be extracted according to the desired cable sequence to the congregator slit 9.

Fig. 12 presents the situation when the predetermined cable 17 that is to be transferred from the sorting buffer 5 into the congregator slit 9 is aligned in front of the congregator slit 9, which means that the storage bin 11 that is carrying the cable 17 is in the transport position 18. The cable transfer member 29 may now be moved out of the closing position 71, opening the storage bin 11 to the congregator slit 9.

Fig. 13 shows the cable transfer member 29 after being moved into the extracting position 31, in which the cable 17 is located between the congregator slit 9 and the cable transfer member 29. The cable transfer member 29 may have been moved around the cable 17 being in the storage position 23.

Fig. 14 shows the situation after the cable transfer member 29 has been moved along the extracting direction 73 back into the closing position 71. During movement along the extracting direction 73, the cable transfer member 29 has transferred the cable 17 out of the storage bin 11 into the congregator slit 9.

The cable transfer member 9 will subsequently remain in the closing position 71 while the cylinder 3 rotates in one of the directions 55 or 55' in order to move the next predetermined cable 17 to the congregator slit 9. Subsequently, the process steps shown in Figs. 10 to 14 will be repeated until all predetermined cables 17 are extracted from the sorting buffer 5 into the congregator slit 9.

**Reference Signs**

| | |
|---|---|
| 1 | Cable sorter |
| 3 | Cylinder |
| 5 | Sorting buffer |
| 7 | Congregation arrangement |
| 9 | Congregation slit |
| 10, 10' | Slit surfaces |
| 11 | Storange bins |
| 13 | Opening |
| 15 | Cylinder surface |
| 17 | Cable |
| 18 | Transport position |
| 19 | Transfer position |
| 21 | Width of the congregator slit |
| 23 | Storage position |
| 25 | Stationary locking member |
| 27 | Cover opening |
| 29 | Cable transfer member |
| 31 | Extracting position |
| 33 | Transfer arrangement |
| 34 | Cable support surface |
| 35 | Transfer recess |
| 37 | Aligning head |
| 39 | Aligning surface |
| 41 | Housing |
| 43 | Bending space |
| 45 | Receptacle |
| 46 | Width of the receptacle |
| 47 | Cable diameter |
| 49 | Pusher surface |
| 50 | Width of the pusher surface |
| 51 | Flat area |
| 53 | Feeding direction |
| 55, 55' | Direction of movement |
| 57 | Move-up position |
| 59, 59' | Surface normal |
| 61 | Cable surface |
| 63 | Centreline |
| 65, 65' | Contact point |
| 67 | Insertion opening |
| 71 | Closing position |
| 73 | Extracting direction |
| R | Rotational axis |
| α, α' | Pressure angle |
| β | Angle of flat area |

## Claims

1. Cable sorter automat (1) for rearranging a plurality of cables (17) of a predefined cable diameter (47) in a predetermined sequence, in particular for cables (17) comprising at least one of an optical fiber and an electric wire, wherein the cable sorter automat (1) comprises at least one sorting buffer (5) with storage bins (11) for accommodating individual uncoiled cables (17), a congregator arrangement (7) for transferring cables (17) to and from the sorting buffer (5), wherein the congregator arrangement (7) comprises at least one congregator slit (9), and wherein the sorting buffer (5) and the congregator arrangement (7) are movable relatively to each other.

2. Cable sorter automat (1) according to claim 1, wherein at least one congregator slit (9) is adapted to force cables (17) in a flat and parallel arrangement, and wherein a width (21) of the congregator slit (9) is chosen between at least 100 % and less than 200 % of the cable diameter (47).

3. Cable sorter automat (1) according to claim 1 or 2, wherein at least one storage bin (11) comprises an opening (13), which, in a transport position (18), is aligned to a congregator slit (9).

4. Cable sorter automat (1) according to one of the claims 1 to 3, wherein at least one storage bin (11) is formed as a receptacle (45) for receiving cables (17), with a diameter of the receptacle (45) being chosen between 110 % and 130 % of the cable diameter (47).

5. Cable sorter automat (1) according to one of the claims 1 to 4, wherein an opening (13) of at least one of the storage bins (11) is limited by at least one pusher surface (49), and wherein a direction of the pusher surface (49) is having a component parallel to a surface (15) of the sorting buffer (5) and a component perpendicular to the surface (15) of the sorting buffer (5).

6. Cable sorter automat (1) according to claim 5, wherein at least one of the pusher surfaces (49) is at least partially flat, wherein the angle between the flat area (51) and the surface (15) of the sorting buffer (5) adjacent to the pusher surface (49) is chosen to be between 25° and 35°.

7. Cable sorter automat (1) according to one of the claims 1 to 6, wherein the cable sorter automat (1) comprises at least one stationary locking member (25), adapted to close the storage bins (11) which are not aligned to a congregator slit (9).

8. Cable sorter automat (1) according to one of the claims 1 to 7, wherein the cable sorter automat (1) comprises at least one cable transfer member (29), adapted to transfer at least one cable (17) between a storage position (23), in which the at least one cable (17) is accommodated in a storage bin (11) and a transfer position (19) in which the at least one cable (17) is located in a congregator slit (9).

9. Cable sorter automat (1) according to claim 8, wherein the at least one cable transfer member (29) is movable into a closing position (71) in which the at least one cable transfer member (29) is at least in parts aligned with the surface (15) of the sorting buffer (9).

10. Cable sorter automat (1) according to claim 8 or 9, wherein at least one sorting buffer (9) comprises at least one transfer recess (35), which is opened towards the surface (15) of the sorting buffer (9), and wherein at least one cable transfer member (29) is movable into an extracting position (73) in which at least one cable transfer member (29) is at least partially penetrating the at least one transfer recess (35).

11. Cable sorter automat (1) according to one of the claims 1 to 10, wherein the sorting buffer (5) is formed by at least one cylinder (3), which is revolvable around a rotational axis (R) and wherein at least one storage bin (11) is arranged at the cylinder (3) surface, the at least one storage bin (11) being aligned parallel to the rotational axis (R).

12. Cable sorter automat (1) according to claim 11, wherein the at least one transfer recess (35) is formed by a continuous channel, encircling the cylinder (3) around the rotational axis (R) and being opened in a radial direction towards a cylinder surface (15).

13. Cable sorter automat (1) according to one of the claims 1 to 12, wherein the cable sorter automat (1) comprises a cable sensor, which is directed onto cables (17), the cables (17) being located in a congregator slit (9) or in the sorting buffer (5), and wherein the cable sensor is adapted to detect a cable identification characteristic and to transmit a cable sequence signal to a control module.

14. Cable sorter automat (1) according to claim 13, wherein the control module comprises a comparator, which is adapted to compare the cable sequence signal to a predefined target sequence, and wherein the control module is operatively connected to a drive, moving at least one of the sorting buffer (5) and the cable transfer member (29).

15. Method for rearranging a plurality of cables (17) in a predefined sequence, in particular for cables (17) comprising at least one of an optical fiber and an electric wire, wherein the plurality of cables (17) is loaded into a sorting buffer (5), in which the cables (17) are stored separately and subsequently moved individually from the sorting buffer (5) into a congregating arrangement (7) in the predefined sequence.
